# EUROPEAN PATENT SPECIFICATION

(11) **EP 0 354 220 B1**
(45) Date of publication and mention of the grant of the patent: **21.04.1993**
(21) Application number: 88907893.7
(22) Date of filing: 12.08.1988
(51) Int. Cl.: B01D 53/34

(54) **MULTI-STAGE PROCESS FOR REDUCING THE CONCENTRATION OF POLLUTANTS IN AN EFFLUENT**
MULTI-SCHRITT-VERFAHREN ZUR REDUZIERUNG DES VERUNREINIGUNGSGEHALTES IN EINEM ABGASSTROM
PROCEDE MULTI-ETAPE SERVANT A REDUIRE LA CONCENTRATION DE POLLUANTS DANS UN EFFLUENT

(30) Priority: 23.09.1987 US 100128; 14.10.1987 US 108779; 14.12.1987 US 132801; 29.02.1988 US 155864; 15.06.1988 US 207292; 15.06.1988 US 207382
(43) Date of publication of application: 14.02.1990
(73) Proprietor: FUEL TECH, INC., Stamford, CT 06906 (US)
(72) Inventor: EPPERLY, William, Robert 32 Canaan Close, New Canaan, CT 06840 (US); PETER-HOBLYN, Jeremy, Deeble Lamellon Street Tudy, Cornwall PL30 3NR (GB); SHULOF, George, F., Jr., Wilton, CT 06897 (US); SULLIVAN, James, Christopher, Norwalk, CT 06854 (US); SPRAGUE, Barry, Normand, West Haven, CT 06516 (US); O'LEARY, John, Henry, Danbury, CT 06810 (US)
(74) Representative: VOSSIUS & PARTNER
(86) International application number: US8802748
(87) International publication number: WO8902780

(56) References cited:
- EP-A- 0 232 976
- US-A- 3 565 575
- US-A- 4 115 515

## Description

The present invention relates to a process for reducing the concentration of pollutants, especially pollutants such as nitrogen oxides (NOₓ) in the effluent from the combustion of a carbonaceous fuel. Preferably, the effluent is the oxygen-rich effluent from the combustion of a carbonaceous fuel.

Carbonaceous fuels can be made to burn more completely, and with reduced emissions of carbon monoxide and unburned hydrocarbons, when the oxygen concentrations and air/fuel ratios employed are those which permit high flame temperatures. When fossil fuels are used to fire large utility boilers, temperatures above about 1094°C (2000°F) and typically about 1205°C (2200°F) to about 1650°C (3000°F) are generated. Unfortunately, such high temperatures, as well as hot spots of higher temperatures, tend to cause the production of thermal NOₓ, the temperatures being so high that free radicals of oxygen and nitrogen are formed and chemically combine as nitrogen oxides. Even in circulating fluidized bed boilers that operate at temperatures of 705°C (1300°F) to 872°C (1600°F), significant amounts of nitrogen oxides can be formed. Moreover, such high temperatures, as well as hot spots of higher temperatures, tend also to cause the production of pollutants such as SO₃, the temperatures being so high that oxidation of sulfur dioxide (SO₂) occurs wherein sulfur dioxide and atomic oxygen (O) combine to form sulfur trioxide. This effect is amplified when high sulfur fuels are used. Additionally, sulfur trioxide can form at lower temperatures by the catalytic reaction of sulfur dioxide with molecular oxygen (O₂) brought about by catalytic metals such as vanadium oxide and iron oxides which can be in the boiler interior at lower temperatures. Sulfur trioxide, therefore, can be formed even in circulating fluidized bed boilers.

Nitrogen oxides are troublesome pollutants which are found in the combustion effluent streams of large utility and circulating fluidized bed boilers when fired as described above, and comprise a major irritant in smog. It is further believed that nitrogen oxides often undergo a process known as photo-chemical smog formation, through a series of reactions in the presence of sunlight and hydrocarbons. Moreover, nitrogen oxides are a significant contributor to acid rain.

Sulfur oxides, especially SO₃, are also considered to be troublesome pollutants. Sulfur trioxide can combine with ammonia (NH₃) in the effluent stream (such as ammonia present as a byproduct generated in a nitrogen oxides reducing process utilizing urea or the like) to form ammonium bisulfate (NH₄HSO₄) which can form undesirable deposits on the walls and heat transfer surfaces, particularly the air heater, of the boiler.

Unfortunately, the high temperatures within boilers render most common methods of reducing NOₓ and/or SO₃ concentrations, such as effluent scrubbing or catalyst grids, uneconomical, infeasible, or both.

Many different processes and compositions have been proposed for chemically reducing nitrogen oxide levels in an effluent. These proposals call for adding chemicals, dry or in solution, directly to the effluent and can achieve significant NOₓ reductions. However, none have been identified which add a number of different chemicals at defined, distinct temperature zones to achieve NOₓ reductions of greater than 50%, and preferably greater than 75%, with commercially practical residence times. Moreover, some of the techniques are capable of reducing NOₓ only at the expense of creating undesirable levels of other pollutants such as ammonia and/or carbon monoxide. Additionally, none of the prior processes is capable of achieving both reductions in nitrogen oxides as well as significant reductions in sulfur trioxide in a single unified process.

In US-A-3,900,554, Lyon discloses reducing nitrogen monoxide (NO) in a combustion effluent by injecting ammonia, specified ammonia precursors or their aqueous solutions into the effluent for mixing with the nitrogen monoxide at a temperature within the range of 872°C (1600°F) to 1094°C (2000°F). Lyon also suggests the use of reducing agents, such as hydrogen or various hydrocarbons, to permit the effective use of ammonia at effluent temperatures as low as 705°C (1300°F). Although the patent suggests staged injection of the ammonia composition, there remains no teaching of the efficacy of injecting distinct compositions at different temperature zones to optimize NOₓ reduction without producing a substantial amount of other pollutants.

In US-A-4 115 515, Tenner et al. describe a reduction of nitrogen oxides in boiler effluents by injecting ammonia alone or in combination with an additional reducing gas, such as hydrogen, in a series of injections at effluent temperatures of 700°C to 1000°C. Although this patent suggests staged injection of the ammonia composition, there again is no teaching of the efficacy of injecting distinct compositions at different temperature zones to optimize NOₓ reduction without producing a substantial amount of other pollutants.

In US-A-4,208,386, Arand et al. disclose that, for oxygen-rich effluents, the temperature of the effluent should be in the range of 705°C (1300°F) to 1094°C (2000°F) for reducing the nitrogen oxides concentration using urea added dry or in aqueous solution. Alkanoic solvents are said to be reducing agents which, like hydrogen, carbon monoxide, etc., enable the effective operating temperature to be lowered to below 872°C (1600°F). Disclosed again is the suggestion to inject in increments, but these incremental injections are of the same urea composition and must all be at positions meeting the same temperature and oxygen concentration conditions. The same holds true for US-A-4,325,924 to Arand et al.

Although the prior art discloses injection of a composition for reducing nitrogen oxides at a number of spaced positions in, for instance, Bowers, in commonly assigned US-A-4,751,065, and Bowers, in commonly assigned US-A-4,719,092, each of these disclosures is related to the injection of the same composition at locations in which the same conditions, such as temperature and oxygen concentration, exist.

Furthermore, although the reduction of the concentration of nitrogen oxides in an effluent to as great an extent as possible is highly desirable, prior art systems for reducing NOₓ concentrations are limited, not only by the amount of NOₓ reduction that can be achieved utilizing them, but also by the amount of other pollutants, such as ammonia or carbon monoxide, generated as byproducts of the NOₓ-reducing process.

What is desired, therefore, is a process for substantially reducing the concentration of nitrogen oxides and/or sulfur trioxide in an effluent while maintaining a suitably low level of other pollutants.

For the purposes of this description, the following definitions shall apply:
"temperature zone" refers to a locale wherein, under steady state conditions, the effluent temperature is within a certain range;
"treatment agent" refers to a composition comprising a reductant chemical, i.e., a pollution reducing chemical capable of reducing NOₓ, sulfur oxides (SOₓ) or other pollutants, and, preferably, a solvent;
"urea" and "ammonia" refer to the compounds urea and ammonia themselves, as well as compounds equivalent in effect. Among those compounds are ammonium carbonate, ammonium formate, ammonium oxalate, ammonium hydroxide and various stable amines, and their solutions in water;
"pollution index" refers to an index which indicates the presence of all of the pollutants in the effluent;
"oxygenated hydrocarbon" refers to substituted and unsubstituted, straight or branch-chain aliphatic and cyclic, heterocyclic and aromatic hydrocarbons having at least one oxygen either in or bonded directly to the primary hydrocarbon chain or in or bonded directly to a substituent group, and mixtures thereof, typical substituent groups of which include carboxylic acid groups (COOH), peroxide groups (-O-O-), carbonyl groups (C=O), hydroxy groups (OH), ether groups (-O-), ester groups (COOR), etc.;
"hydroxy amino hydrocarbon" refers to any cyclic, heterocyclic, aromatic, straight or branched chain, substituted or unsubstituted hydrocarbon having at least one substituent comprising a hydroxy or a carboxy group and at least one primary, secondary or tertiary amino group;
"ammonium salt of an organic acid having a carbon to nitrogen ratio of greater than 1:1" refers to salts which can be formed by the neutralization of ammonium hydroxide with an organic acid, preferably a carboxylic acid (i.e., an acid having one or more carboxyl (COOH) groups). If the acid has more than one carboxylate group, they may be partially or completely neutralized by ammonium hydroxide. The ratio of carbon to nitrogen in the salt is greater than 1:1, meaning that there is more than one carbon per each nitrogen in the compound, most preferably there are at least two carbons per each nitrogen in the compound;
"five or six-membered heterocyclic hydrocarbon having at least one cyclic nitrogen" refers to a cyclic five or six member hydrocarbon in which one or more of the atoms in the ring is nitrogen. The cyclic compounds can be either saturated or unsaturated;
"heterocyclic hydrocarbon having at least one cyclic oxygen" refers to a ringed hydrocarbon compound having at least one ring oxygen;
"alcohol" refers to a hydrocarbon derivative in which one or more hydrogen atoms have been replaced by a hydroxy group;
"sugar" refers to a number of useful saccharide materials which are capable of decreasing the NOₓ concentration in an effluent under conditions as described herein, including non-reducing and reducing water soluble mono-saccharides and the reducing and non-reducing polysaccharides and their degradation products, such as pentoses including aldopentoses, methyl pentoses, keptopentoses like xylose and arabinose, deoxyaldoses like rhaminose, hexoses and reducing saccharides such as aldo hexoses like glucose, galactose and mannose, ketohexoses like fructose and sorbose, disaccharides like lactose and maltose, non-reducing disaccharides like sucrose and other polysaccharides such as dextrin and raffinose, hydrolyzed starches which contain as their constituents oligosaccharides, and water dispersible polysaccharides;
"furfural" refers to furfural itself as well as substituted furfural. Typical substituents include side chains comprising straight and branched-chain, substituted and unsubstituted aliphatic groups, oxygenated hydrocarbon groups and amino groups;
"amino acid" refers to any organic compound containing an amine group and a carboxylic acid group;
"NH₄-lignosulfonate" and "calcium lignosulfonate" refer respectively to the ammonium and calcium salts of lignosulfonic acid, which are sulfonate salts made from the lignin of sulfite pulp-mill liquors;
"1,3 dioxolane" refers to a five-membered heterocyclic hydrocarbon having oxygen at the 1 and 3 positions (also ethylene methylene dioxide);
"fish oil" refers to a drying oil obtained chiefly from menhaden, pilchard, sardine and herring, extracted from the entire body of the fish by cooking and compressing;
"solution" refers to any solution, mixture or dispersion, with "solvent" referring to solvent, carrier or dispersant.

This invention relates to a process for reducing the concentration of at least one pollutant in the effluent from the combustion of a carbonaceous fuel. One of the objectives of the invention is to achieve the desired level of pollutant control, such as a significant reduction in nitrogen oxides or sulfur trioxide concentration, while minimizing other harmful emissions such as ammonia and carbon monoxide, and maximizing the utilization of the chemicals employed.

More particularly, the present invention comprises a process which serially treats the effluent from the combustion of a carbonaceous fuel by introducing different treatment agents at different effluent temperatures. For example, a first treatment agent is introduced into the effluent at a first temperature zone to reduce the effluent concentration of a first pollutant, a second treatment agent is introduced into the effluent at a second temperature zone to reduce the effluent concentration of either the first pollutant or a second pollutant, and the process is repeated, if desired, to achieve the desired level of pollutant control. The composition of each treatment agent is formulated to be effective at reducing the concentration of the target pollutant, especially nitrogen oxides or sulfur trioxide, in the effluent when introduced into the effluent at the designated temperature zone.

It has been found that nitrogen oxide and/or sulfur trioxide reduction can be improved by increasing the amount of reductant chemical employed in the treatment agent. However, a point is reached where emissions of other pollutants such as ammonia are experienced. The emission of such other pollutants is undesirable. For instance, the emission of ammonia can lead to harmful deposits of ammonium bisulfate, especially when there is sulfur trioxide in the effluent. Furthermore, carbon monoxide, another undesirable pollutant, can also be produced. This limits the amount of pollutant control possible in any one treatment step. It has also been found that different chemical formulations are effective at reducing nitrogen oxides or sulfur trioxide concentrations at different temperatures.

Moreover, it is not possible to introduce chemicals in every location in a boiler, because of design considerations. The introduction must occur in a location where space is available inside the boiler for distribution of chemicals. Introduction directly on heat exchange tubes could lead to harmful deposits and ineffective use of chemicals. As a practical matter, adequate space for introduction may typically exist in a boiler at two to four locations, and these will be at different temperatures because of the heat transfer taking place.

In the practice of this invention, nitrogen oxides reduction can be maximized by selecting the locations at which introduction is possible, formulating treatment agents that are effective at reducing the nitrogen oxides level at the temperature at each location, injecting the chemicals at each location to maximize reduction while avoiding other emissions such as ammonia and carbon monoxide, and controlling the introduction process as boiler load varies. For example, if boiler load drops from 100% to 50%, temperatures at each location may be lowered and changes in introductions (amount, composition, or both) may be needed.

This invention can be used to achieve a given level of nitrogen oxides control and also to minimize the chemical cost of doing so. To accomplish this, use of the least expensive treatment agent is preferably maximized first, followed by the next least expensive treatment agent, etc., until the desired level of control is achieved.

The present invention can also be used to reduce the amount of nitrogen oxides in the effluent while also reducing the concentration of SO₃ in the effluent by introducing a first, NOₓ-reducing treatment agent into the effluent at a first effluent temperature zone and then introducing a second, SO₃-reducing treatment agent into the effluent at a second effluent temperature zone. Most preferably, nitrogen oxides reductions are maximized by providing a second treatment agent which is capable of reducing both sulfur trioxide and nitrogen oxides.

Although this description is written in terms of the reduction of the concentration of nitrogen oxides and/or sulfur trioxide in the effluent, the skilled artisan will recognize that the process of this invention may be equally applicable to the reduction of other pollutants which may be found in the effluent from the combustion of a carbonaceous fuel. Furthermore, although written in terms of utilization in a suspension-fired boiler, the description should be understood to be equally applicable to other types of units such as circulating fluidized bed boilers and moving grate boilers, both firing a variety of fuels including refuse. The description is also applicable to gas turbines.

The presence of pollutants in an effluent may be referred to as the pollution index. It will be understood that reducing the concentration of one pollutant, such as nitrogen oxides, in the effluent in a process which simultaneously leads to the generation of an equal or greater amount of another pollutant does not lower the pollution index. Likewise, reduction of the effluent concentrations of two different pollutants, such as nitrogen oxides and sulfur trioxide, leads to a reduction in the effluent pollution index greater than the reduction obtained when only one pollutant is reduced. The present invention accomplishes the reduction of nitrogen oxides while substantially avoiding the production of other pollutants such as ammonia or carbon monoxide, and/or also accomplishes the reduction of sulfur trioxide, thus effecting a net lowering of the pollution index of the effluent, by a step-wise or multi-stage process wherein a plurality of treatment fluids are introduced into the effluent at a plurality of temperature zones.

The use of the terms "first", "second" and "third" treatment zones in this description is meant to denote relative locations of the treatment zones. For instance, the second temperature zone can be any zone where the effluent temperature is lower than the effluent temperature of the first temperature zone. Similarly, the third temperature zone can be any zone where the effluent temperature is lower than the effluent temperature in the second temperature zone, etc. This description should not be read as indicating that any specific temperature zone for introduction must in all cases be in a location where the effluent is in a specific temperature range (i.e., the first temperature zone does not in all cases have to be in a location where the effluent temperature is in the range of about 927°C (1700°F) to about 1094°C (2000°F), and as high as about 1150°C (2100°F)). Moreover, the terms "first", "second", "third", etc. are meant to be relevant with respect to the present invention only and do not exclude other effluent treatments performed either "before" (in time or location) the first treatment or "after" the third or final treatment, whether for the same or different pollutants, combustion enhancement, etc.

The treatment agent to be introduced at any particular temperature zone is preferably chosen to be most effective at the effluent temperatures existing within that zone. For instance, if the first available temperature zone for introduction is in an upstream location comprising a temperature zone where the effluent temperature is in the range of about 927°C (1700°F) to about 1094°C (2000°F) or even as high as 1150°C (2100°F), the treatment fluid can be chosen to be that which is most effective in that temperature range, such as an aqueous solution of urea, as disclosed by Arand et al. in US-A-4,208,386, and by Bowers in US-A-4,719,092 entitled "Reduction of Nitrogen-Based Pollutants Through the Use of Urea Solutions Containing Oxygenated Hydrocarbon Solvents", or an aqueous solution of ammonia, or gaseous ammonia itself, as disclosed by Lyon in US-A-3,900,554. Although the mechanism by which ammonia or urea decrease the concentration of nitrogen oxides is not fully understood, it is believed that they function by facilitating a series of reactions involving NHₓ radicals (x being an integer) and NOₓ. The molar ratio of the concentration of NHₓ radicals to the concentration of NOₓ ([NHₓ)/[NOₓ]) is often referred to as the normalized stoichiometric ratio (NSR).

If the geometry of the boiler permits, two introductions can be made in an upstream location. The first can be further upstream in a temperature zone where the effluent temperature is about 1011°C (1850°F). to about 1094°C (2000°F) and the second at a location downstream from the first location in a temperature zone where the effluent temperature is about 927°C (1700°F) to about 1011°C (1850°F). As indicated by the referenced disclosures, the urea or ammonia solution can be more concentrated (e.g., about 10% to about 50% urea or ammonia by weight) in the lower temperature location and more dilute (e.g., preferably about 5% to about 10% urea or ammonia by weight and as low as about 2%) in the higher temperature location.

Appropriate temperature zones for introduction according to the present invention may also be found downstream from the zones discussed above, where the effluent temperature is in the range of about 733°C (1350°F) to about 955°C (1750°F). Suitable treatment agents for introduction into a temperature zone having such effluent temperatures are disclosed in those patent discussed above and also by Bowers in US-A-4,751,065 entitled "Reduction of Nitrogen- and Carbon-Based Pollutants"; commonly assigned US-A-4 770 863 entitled "Process for the Reduction of Nitrogen Oxides in an Effluent" filed in the names of Epperly and Sullivan on February 13, 1987; commonly assigned US-A-4 877 591 entitled "Process for the Reduction of Nitrogen Oxides in an Effluent Using Sugar" filed in the names of Epperly and Sullivan on March 13, 1987; commonly assigned US-A-4 888 165 entitled "Process for the Reduction of Nitrogen Oxides in an Effluent Using a Heterocyclic Hydrocarbon" filed in the names of Epperly and Sullivan on March 13, 1987; commonly assigned US-A-4 803 059 entitled "Process for the Reduction of Nitrogen Oxides in an Effluent Using a Hydroxy Amino Hydrocarbon" filed in the names of Sullivan and Epperly on April 15, 1987 US-A-4 844 878. The disclosed treatment agents include aqueous solutions of ammonia or urea, enhanced with suitable enhancers such as hexamethylenetetramine (HMTA), a paraffinic hydrocarbon, an olefinic hydrocarbon, an aromatic hydrocarbon, an oxygenated hydrocarbon (such as acetone, sugar, especially sucrose, d-galactose and molasses, an alcohol, especially ethylene glycol, methanol, furfurylalcohol, 1,3 butylene glycol, tetrahydrofuryl alcohol, 2,5-furandimethanol, a lignin derivative, especially NH₄-lignosulfonate and calcium lignosulfonate, a carboxylic acid, especially 2-furoic acid, gluconic acid, citric acid, formic acid, coumalic acid, 2,3,4,5-tetracarboxylic acid, furylacrylic acid, barbituric acid, oxalic acid and mucic acid, a peroxide, an aldehyde, an ether, an ester, a ketone, glycerin, tetrahydrofuran, acetone, 1,3 dioxolane, 1,4 dioxane, tetrahydrofuran, furfurylamine, n-butyl acetate, methylal, furan, fish oil, furfuryl acetate, tetrahydrofuran tetrahydrofurylamine, tetrahydropyran, mannitol, hexamethylenediamine and acetic anhydride), an ammonium salt of an organic acid having a carbon to nitrogen ratio of greater than 1:1 (such as ammonium acetate, ammonium and diammonium adipate, ammonium benzoate, ammonium binoxalate, ammonium caprylate, ammonium, diammonium and triammonium citrate, ammonium crotonate, ammonium and diammonium dodecanoate, ammonium and diammonium fumarate, ammonium heptanoate, ammonium linolenate, ammonium and diammonium malate, ammonium mono butyrate, ammonium oleate, ammonium and diammonium pthalate, ammonium propionate, ammonium salicylate, ammonium and diammonium succinate ammonium and diammonium tartarate, and ammonium, diammonium and triammonium trimellitate), a hydroxy amino hydrocarbon (such as alkanolamines, amino acids and protein-containing compositions), a heterocyclic hydrocarbon having at least one cyclic oxygen (such as furfural and derivatives of furfural), a five or six membered heterocyclic hydrocarbon having at least one cyclic nitrogen (such as piperazine, piperidine, pyridine, pyrazine, pyrazole, imidazole, oxazolidone, pyrrole, pyrrolidine), hydrogen peroxide, guanidine, guanidine carbonate, biguanidine, guanylurea sulfate, melamine, dicyandiamide, calcium cyanamide, biuret, 1,1'-azobisformamide, methylol urea, methylol urea-urea condensation product, dimethylol urea, methyl urea, dimethyl urea and mixtures thereof, as well as aqueous solutions of the enhancers themselves.

The geometry of the boiler may also permit more than one temperature zone for introduction within the effluent temperature range of about 733°C (1350°F) to about 955°C (1750°F). For example, an introduction can be made at a location in a temperature zone where the effluent temperature is in the range of about 844°C (1550°F) to about 955°C (1750°F). A second location for introduction can be in a temperature zone where the effluent temperature is in the range of about 733°C (1350°F) to about 844°C (1550°F). The treatment agent introduced in the second of the indicated temperature zones can be similar to that of the first or can be less dilute, or comprise a different enhancer concentration, etc., as would be familiar to the skilled artisan upon reading the referenced disclosures.

Another temperature zone in a boiler at which introduction may be made is at the location where the effluent temperature is below about 761°C (1400°F). As disclosed by commonly assigned US-A-4 877 590 entitled "Process for Nitrogen Oxides Reduction with Minimization of the Production of Other Pollutants" filed in the names of Epperly, O'Leary, Sullivan and Sprague on February 2, 1988, a suitable treatment agent for introduction into the effluent at such effluent temperatures comprises a hydrocarbon, especially an oxygenated hydrocarbon such as ethylene glycol, sugar or furfural, or hydrogen peroxide. More than one temperature zone for introduction of a treatment agent can also be located within the lower effluent temperature locations in the boiler.

In a preferred embodiment, the process comprises injecting a first treatment agent into the effluent at a first temperature zone. For instance, in a large suspension-fired utility boiler, the location of introduction of the first treatment fluid can be upstream from the superheater, such that the effluent temperature in the first temperature zone is greater than about 927°C (1700°F). The composition and amount of the first treatment agent can then be chosen to provide effective reduction of NOₓ concentration in an effluent which is at temperatures greater than about 927°C (1700°F). while minimizing the production of ammonia. Suitable formulations for use as the first treatment agent are those comprising aqueous solutions of urea or ammonia, or gaseous ammonia.

The urea or ammonia aqueous solution functioning as the first treatment agent is preferably introduced at a number of spaced positions within the first temperature zone from nozzles or other apparatus which are effective to uniformly form and disperse droplets of the solution within the flowing effluent stream to achieve uniform mixing.

The rate of introduction of the first treatment agent into the effluent at the first temperature zone is preferably that rate which achieves maximum NOₓ-concentration reduction up until the point of "ammonia breakthrough". "Ammonia breakthrough" is a term used in the art which refers to the point where a significant increase in the NH₃ concentration with rate of introduction is observed. The actual rate of introduction of the first treatment agent is determined experimentally by "tuning" the rate of introduction to achieve the conditions described above, because the actual rate will vary with effluent stream flow rate, as well as the particular temperature at that temperature zone, which can vary within the given range due to the load at which the boiler is fired. Advantageously, in the situation where the temperature range within the first temperature zone is greater than about 927°C (1700°F), and the first treatment agent is a solution comprising urea or ammonia, the molar ratio of the nitrogen in the first treatment agent to the baseline nitrogen oxides level is about 1:5 to about 5:1, more preferably about 1:3 to about 3:1, and most preferably about 1:2 to about 2:1.

The temperature of the effluent will have an influence on the concentration of urea or ammonia in the solution. At temperature of between about 927°C (1700°F) and about 1011°C (1850°F), the solution will tend to operate most effectively at concentrations of about 10 to about 50 weight percent. Contrariwise, at temperatures of greater than about 1011°C (1850°F), the concentration of the solution will typically be more dilute, such as about 2 to about 10 weight percent. Alternatively, when the effluent temperature is in the range of about 927°C (1700°F) to about 1011°C (1850°F), the urea or ammonia solution which comprises the first treatment agent may be enhanced by the addition of hexamethylenetetramine. Other enhancers which may be suitable for use include oxygenated hydrocarbons as described above, guanidine, guanidine carbonate, biguanidine, guanylurea sulfate, melamine, dicyandiamide, calcium cyanamide, biuret, 1,1'-azobisformamide, methylol urea, methylol urea-urea condensation product, dimethylol urea, methyl urea, dimethyl urea, and mixtures thereof. It is also understood that the first treatment agent can comprise gaseous ammonia. In addition, depending on boiler configuration, it is anticipated that at least two temperature zones (e.g., one at a location where the effluent temperature is about 1011°C (1850°F) to about 1094°C (2000°F). and another at a location where the effluent temperature is about 927°C (1700°F) to about 1011°C (1850°F) may be possible and/or desired upstream from the superheater, as discussed above.

The process of this invention preferably further comprises injecting a second treatment agent into the effluent at a second treatment zone located downstream from the first temperature zone. For instance, in a large suspension-fired utility boiler, the second temperature zone can advantageously be at a location downstream from the superheater, where the temperature in the second temperature zone will typically be in the range of about 733°C (1350°F) to about 955°C (1750°F). However, as discussed above, the second temperature can be any defined zone having temperatures lower than the first temperature zone, e.g., it may be above or below the temperature of about 733°C (1350°F) to about 955°C (1750°F) so long as it is below that of the first temperature zone. The composition of the second treatment agent is then preferably chosen to achieve optimal nitrogen oxides reduction without ammonia breakthrough in this temperature zone. Advantageously, the second treatment agent for use under these conditions comprises a mixture of urea or ammonia and an enhancer, or the enhancer alone. Suitable enhancers which may be used include HMTA, a paraffinic hydrocarbon, an olefinic hydrocarbon, an aromatic hydrocarbon, an oxygenated hydrocarbon, as described above, an ammonium salt of an organic acid having a carbon to nitrogen ratio of greater than 1:1, as described above, a hydroxy amino hydrocarbon, as described above, a heterocyclic hydrocarbon having at least one cyclic oxygen, as described above, a five or six membered heterocyclic hydrocarbon having at least one cyclic nitrogen, as described above, hydrogen peroxide, guanidine, guanidine carbonate, biguanidine, guanylurea sulfate, melamine, dicyandiamide, calcium cyanamide, biuret, 1,1'-azobisformamide, methylol urea, methylol urea-urea condensation product, dimethylol urea, methyl urea, dimethyl urea and mixtures thereof, as well as aqueous solutions of the enhancers themselves. The most preferred enhancers under these conditions are ethylene glycol, ammonium acetate, pyridine, methanol, sugar and furfural.

The second treatment agent is introduced into the effluent to provide a molar ratio of nitrogen in the agent to the baseline nitrogen oxides concentration suitable to maximize the reduction of NOₓ concentrations in the second temperature zone while minimizing the production of other pollutants, such as ammonia or carbon monoxide. Preferably, the mixture, when composed as described above, is introduced so as to provide a molar ratio of nitrogen in the mixture to the baseline nitrogen oxides level of about 1:5 to about 5:1, more preferably about 1:3 to about 3:1 and most preferably about 1:2 to about 2:1. The enhancer is present in the agent in a weight ratio of enhancer to urea or ammonia of, preferably, about 1:10 to about 5:1, more preferably about 1:5 to about 3:1. Most preferably, the weight ratio of enhancer to urea or ammonia in the ammonia/enhancer agent is about 1:4 to about 2.5:1. In the instance where the treatment agent does not contain any nitrogen-containing compounds, the weight ratio of treatment agent to the baseline nitrogen oxides level should be about 0.5:1 to about 10:1.

Typically, the agent is prepared by dissolving a water-soluble enhancer in water at a concentration of about 5 to about 25 weight percent, more preferably about 10 to about 20 weight percent, and the desired amount of urea or ammonia mixed in. The resulting mixture is then introduced into the effluent at a number of spaced positions within the second temperature zone from nozzles or other apparatus which are effective to uniformly form and disperse droplets of the solution within the flowing effluent stream to achieve uniform mixing. As discussed above, there can be at least two temperature zones, if desired and boiler configuration permits, within the indicated effluent temperature range with at least two treatment agents introduced thereinto.

Additionally, the second treatment agent can be used to perform ammonia scrubbing, as disclosed by commonly assigned US-A-4 830 839 entitled "Ammonia Scrubbing" filed in the names of Epperly, Peter-Hoblyn and Sullivan on December 14, 1987. Ammonia scrubbing involves the introduction of a non-nitrogenous treatment agent such as a hydrocarbon, especially an oxygenated hydrocarbon, at an effluent temperature of greater than about 733°C (1350°F) under conditions effective to reduce the amount of ammonia in the effluent, while also achieving further nitrogen oxides reductions. Generally, the non-nitrogenous treatment agent is introduced into the effluent at a weight ratio of treatment agent to effluent ammonia level of about 2:1 to about 200:1.

A more preferred embodiment of the present invention comprises introduction of a third treatment agent into the effluent at a third temperature zone, wherein the third temperature zone is located sequentially downstream from the first and second temperature zones. For instance, in a suspension-fired utility boiler, the third temperature zone can advantageously be located after the economizer where the effluent temperature will be within the range of about 427°C (800°F) to about 761°C (1400°F) Under these conditions, the third treatment agent preferably comprises a hydrocarbon or hydrogen peroxide. The most preferred hydrocarbons suitable for use in the third treatment fluid under the indicated conditions are oxygenated hydrocarbons such as low molecular weight ketones, aldehydes, mono, di or polyhydric alcohols of aliphatic hydrocarbons and hydroxy amino hydrocarbons such as monoethanolamine and amino acetic acid (glycine). Ethylene glycol, methanol, furfural, sugar and glycerol are preferred oxygenated hydrocarbons for this purpose, with ethylene glycol, methanol and sugar being most preferred. Other hydrocarbons which can advantageously be employed include nitrogenated hydrocarbons such as monomethylamine, triethylene tetramine, hexamethylenediamine, tetraethylene pentamine, bis-hexamethylene triamine, polyamine HpA, 1,2-diaminopropane, N,N-dimethylethylenediamine, tetramethylethylenediamine, 2-methylaziridine, bis (3-aminopropyl) ethylenediamine, tetramethyldiaminomethane, ethylenediamine and diethylenetriamine. Mixtures of polyols, such as those mixtures of low molecular weight polyols known as hydrogenated starch hydrosylates, can also be advantageously employed. Additional hydrocarbons which are suitable for use in the present invention include paraffinic, olefinic and aromatic hydrocarbons, including naphtha-based hydrocarbons, and mixtures thereof.

The hydrocarbon can be used alone in its pure form, in dispersions, preferably aqueous dispersions or in solution, preferably aqueous solution due to the economy of aqueous solutions, although there may be instances where other solvents may be advantageously used, either alone or in combination with water, as would be known to the skilled artisan. The level of the hydrocarbon employed should be that level necessary to elicit optimal reductions in the concentration of nitrogen oxides in the effluent while also minimizing the presence of other pollutants, such as ammonia and carbon monoxide. Advantageously, the hydrocarbon is employed at a weight ratio of hydrocarbon to the third baseline nitrogen oxides level of about 1:5 to about 5:1, most preferably about 1:2 to about 2:1. The exact amount of hydrocarbon employed may vary depending upon the overall economics of the process.

A hydrocarbon, when utilized as the third treatment agent according to this invention, is preferably introduced into the effluent at a number of spaced positions within the third temperature zone from nozzles or other apparatus which are effective to uniformly form and disperse droplets of the hydrocarbon, either alone or in a dispersion or solution as discussed above, within the flowing effluent stream to achieve uniform mixing. Depending on boiler configuration, there can be two zones of introduction in the temperature range of about 427°C (800°F) to about 761°C (1400°F).

Advantageously, the process of the present invention can be used to reduce the concentration of sulfur trioxide in the effluent in addition to the NOₓ reductions and ammonia scrubbing obtained. The introduction of a treatment agent which comprises hydrogen peroxide or a hydrocarbon, especially an oxygenated hydrocarbon such as alcohols, sugars, lignin derivatives, carboxylic acids, peroxides, aldehydes, ethers, esters, ketones, and mixtures thereof, into the effluent at a temperature zone where the effluent temperature is below about 927°C (1700°F), especially no greater than about 788°C (1450°F) will significantly reduce the SO₃ content of the effluent. The most preferred oxygenated hydrocarbons for this purpose include methanol, ethylene glycol, molasses, glycerin, tetrahydrofuran, acetone, citric acid, sucrose, and mixtures thereof, which can be introduced as an aqueous solution at a ratio of hydrocarbon to sulfur trioxide of about 3:1 to about 8:1 by weight. The reduction of SO₃ in the effluent is in addition to the NOₓ reduction and/or ammonia scrubbing achieved with the disclosed treatment agents.

It will be recognized that the use of the terms "first", "second" and "third" herein is merely for the sake of convenient description. The actual numbering sequence will vary depending on the actual number of temperature zones chosen and the number of treatment agents introduced in each situation. This number can vary depending on boiler geometry (as discussed above) and the particular pollutant level desired.

The effluent from the combustion of a carbonaceous fuel into which the treatment agents disclosed herein according to the present invention are introduced is generally oxygen-rich, meaning that there is an excess of oxygen in the effluent. Typically, the excess of oxygen is about 15% by volume or less. In conventional utility boilers, the excess of oxygen is in usually the range of about 1% to about 10% by volume.

In practicing the process of the present invention to maximize the reduction of the concentration of nitrogen oxides in the effluent or to achieve a specified level of NOₓ, it is preferred to first "tune" the introduction of the first treatment agent into the first temperature zone to optimize the introduction (i.e., maximize pollutant concentration reduction and minimize production of other pollutants). The introduction of the second treatment agent into the second temperature zone is then "tuned", the introduction of the third treatment agent into the third temperature zone (when a third treatment agent and third temperature zone are used) is advantageously "tuned" third, the introduction of the fourth treatment agent into the fourth temperature zone (when a fourth treatment agent and fourth temperature zone are used) is preferably "tuned" fourth, etc., until the desired number of introductions or level of pollutants is reached.

Once the introduction of treatment agents is optimized, it is also possible to "adjust" the treatment agents, by altering the dilution, relative concentration or particular components of the chemical formulation of the treatment agent, to compensate for changes in boiler operating load, which results in changes of effluent temperature at the locations at which treatment agents are introduced. Adjusting the treatment agents in response to boiler operating load changes ensures that the treatment agent introduced at each location is appropriate to maintain nitrogen oxides at specified levels or to maximize NOₓ reductions for the effluent temperature existing there. Otherwise, inefficient and non-optimized introduction of treatment agents may occur, resulting in lowering of pollutant reductions achieved and, potentially, the generation of substantial amounts of other pollutants.

The identity of other pollutants which comprise the limiting emissions can vary from boiler to boiler, situation to situation, or temperature zone to temperature zone. For instance, at temperature zones where the effluent temperature is relatively high, the limiting emission can be ammonia, whereas at temperature zones where the effluent temperature is relatively low, the limiting emission can be carbon monoxide. Furthermore, it may not be necessary in each case to "tune" the introduction at each temperature zone. Rather, it may be desirable to achieve maximum possible target pollutant reduction at earlier temperature zones irrespective of the production of other emissions, provided that the level of such other emissions can be reduced at later, or the last, temperature zones, especially when a process step involving ammonia scrubbing is utilized. In other words, it is the pollution index after the final introduction that is most significant, not the pollution index at intermediate levels.

Alternatively, to obtain a target level of NOₓ reduction while minimizing chemical cost, maximum use of the least expensive of the treatment agents without significant production of other pollutants is first established. The use of the next least expensive treatment agent is maximized next, and this process is repeated until the desired target level is reached.

Moreover, the introduction of each treatment agent may be performed in a manner so as to minimize the generation of other pollutants such as ammonia or carbon monoxide while maximizing the reduction of the target pollutant, e.g., nitrogen oxides or sulfur trioxide. This can be accomplished through use of the nitrogen oxides reduction versus effluent temperature curve as taught by commonly assigned US-A-4 780 289 entitled "Process for Nitrogen Oxides Reduction and Minimization of the Production of Other Pollutants" filed in the names of Epperly, O'Leary and Sullivan on May 14, 1987.

It will be further understood that when economics, boiler load, target NOₓ levels or other considerations dictate, what was the second temperature zone in one situation can become the first temperature zone in another, and what was the third temperature zone in one situation can become the second temperature zone in another, etc. Moreover, the difference between any two consecutive treatment agents may be the dilution of the solutions which comprise the treatment agents.

It will also be recognized by the skilled artisan that the process of the present invention can be combined with a NOₓ reducing process which utilizes selective catalytic reduction ("SCR") to reduce nitrogen oxides. Such an SCR process utilizes compounds of catalytic materials such as oxides or iron, vanadium and activated carbon to reduce the NOₓ content of effluents. In fact, the SCR treatment can be used as an additional stage in the process of this invention. To do so, the process disclosed herein is practiced to reduce the nitrogen oxides concentration in the effluent and also to adjust the ammonia remaining in the effluent to approximately a 1:1 ratio of ammonia to the nitrogen oxides remaining in the effluent by ammonia scrubbing or other means achievable by the practice of the present invention, and then scrubbing the effluent with SCR to reduce the effluent NOₓ levels even further. In this way, the most advantageous aspects of both the non-catalytic, free radical reduction of nitrogen oxides disclosed herein and SCR can both be obtained, resulting in extremely high NOₓ reductions without significant amounts of other pollutants such as NH₃ or CO remaining in the effluent.

The following examples further illustrate and explain the invention by detailing the operation of the process for reducing nitrogen oxides concentration by multi-stage introduction.

### Example I

The burner used in this example is a burner having an effluent flue conduit, known as a combustion tunnel, approximately 531 cm. (209 inches) in length and having an internal diameter of 20 cm. (8 inches) and walls 5 cm. (2 inches) thick. The burner has a flame area adjacent the effluent entry port and flue gas monitors adjacent the effluent exit port to measure the concentration of compositions such as nitrogen oxides, sulfur oxides, ammonia, carbon monoxide, carbon dioxide, percent excess oxygen and other compounds of interest which may be present in the effluent. The effluent flue conduit additionally has thermocouple ports for temperature measurement at various locations. The temperature of the effluent into which the treatment agents are introduced is measured at the point of introduction utilizing a K-type thermocouple. Atomizing injectors described in commonly assigned US-A-4 842 834 entitled "Process and Apparatus for Reducing the Concentration of Pollutants in an Effluent" filed in the name of Burton on February 2, 1987, the disclosure of which is incorporated herein by reference, are positioned through ports in the effluent flue conduit in order to introduce (by injecting) and distribute the NOₓ-reducing agents into the effluent stream. The burner fuel is a Number 2 fuel oil, and the burner is fired at a rate of 4.35 kgs./hr. (9.6 lbs/hr) to 4.95 kg./hr. (10.9 lbs/hr).

A baseline nitrogen oxides concentration reading is taken prior to beginning each run to calculate the ratio of agents introduced and to facilitate the calculation of the reduction in nitrogen oxides concentration, and a nitrogen oxides reading is taken during introduction of each of the treatment agents to calculate the reduction in the nitrogen oxides concentration in the effluent elicited by each of the agents introduced.

Seven runs were made employing the treatment agents described below. In each, a first treatment agent is introduced into the effluent at the indicated temperature. The second treatment agent is introduced into the effluent flue conduit at a position 110 cm. (43 inches) downstream from the first treatment agent introduction point and the third treatment agent, when used, is introduced at a position 102 cm. (40 inches) downstream from the second treatment agent introduction point.
1. An aqueous solution comprising 10% by weight of urea and 0.2% by weight of a commercially available surfactant is introduced as the first treatment agent at a rate of 100 ml/hr. into the effluent which is at a temperature of 989°C (1810°F); and an aqueous solution comprising 5% by weight of urea, 25% by weight of ethylene glycol and 0.1% by weight of a commercially available surfactant is introduced as the second treatment agent at a rate of 200 ml/hr. into the effluent which is at a temperature of 872°C (1600°F).
2. An aqueous solution comprising 10% by weight of urea and 0.2% by weight of a commercially available surfactant is introduced as the first treatment agent at a rate of 200 ml/hr. into the effluent which is at a temperature of 964°C (1765°F); and an aqueous solution comprising 5% by weight of urea, 25% by weight of ethylene glycol and 0.1% by weight of a commercially available surfactant is introduced as the second treatment agent at a rate of 200 ml/hr. into the effluent which is at a temperature of 841°C (1545°F).
3. An aqueous solution comprising 10% by weight of urea and 0.2% by weight of a commercially available surfactant is introduced as the first treatment agent at a rate of 100 ml/hr. into the effluent which is at a temperature of 861°C (1760°F); and an aqueous solution comprising 10% by weight of urea, 30% by weight of sucrose and 0.2% by weight of a commercially available surfactant is introduced as the second treatment agent at a rate of 200 ml/hr. into the effluent which is at a temperature of 838°C (1540°F).
4. An aqueous solution comprising 10% by weight of urea and 0.2% by weight of a commercially available surfactant is introduced as the first treatment agent at a rate of 200 ml/hr. into the effluent which is at a temperature of 964°C (1765°F); and an aqueous solution comprising 7.28% by weight of urea, 3.12% by weight of hexamethylenetetraamine, 15% by weight of ethylene glycol and 0.208% by weight of a commercially available surfactant is introduced as the second treatment agent at a rate of 200 ml/hr. into the effluent at a temperature of 841°C (1545°F).
5. An aqueous solution comprising 10% by weight of urea and 0.2% by weight of a commercially available surfactant is introduced as the first treatment agent at a rate of 200 ml/hr. into the effluent which is at a temperature of 977°C (1790°F); an aqueous solution comprising 10% by weight of urea, 30% by weight of sucrose and 0.2% by weight of a commercially available surfactant is introduced as the Second treatment agent at a rate of 100 ml/hr. into the effluent at a temperature of 850°C (1560°F); and an aqueous solution comprising 15% by weight of sucrose is introduced as the third treatment agent at a rate of 100 ml/hr. into the effluent at a temperature of 708°C (1305°F).
6. An aqueous solution comprising 10% by weight of urea and 0.2% by weight of a commercially available surfactant is introduced as the first treatment agent at a rate of 200 ml/hr. into the effluent which is at a temperature of 977°C 1790°F.; an aqueous solution comprising 10% by weight of urea, 30% by weight of sucrose and 0.2% by weight of a commercially available surfactant is introduced as the second treatment agent at a rate of 100 ml/hr. into the effluent at a temperature of 850°C (1560°F); and an aqueous solution comprising 15% by weight of glycerol is introduced as the third treatment agent at a rate of 100 ml/hr. into the effluent which is at a temperature of 708°C (1305°F).
7. An aqueous solution comprising 10% by weight of urea and 0.2% by weight of a commercially available surfactant is introduced as the first treatment agent at a rate of 200 ml/hr. into the effluent which is at a temperature of 955°C (1750°F); an aqueous solution comprising 10% by weight of urea, 30% by weight of sucrose and 0.2% by weight of a commercially available surfactant is introduced as the second treatment agent at a rate of 100 ml/hr. into the effluent at a temperature of 833°C (1530°F); and kerosene is introduced as the third treatment agent at a rate of 100 ml/hr. into the effluent which is at a temperature of 702°C (1295°F).

The results of the above-described runs are set out in Table 1.

**Table 1**

| Run | NOₓ Baseline ppm | NOₓ Final ppm | % reduction | NH₃ ppm |
|---|---|---|---|---|
| 1 | 240 | 120 | 50.0 | 4 |
| 2 | 218 | 75 | 65.6 | 21 |
| 3 | 220 | 92 | 58.2 | 19 |
| 4 | 218 | 83 | 61.9 | 30 |
| 5 | 210 | 42 | 80.0 | 21 |
| 6 | 210 | 39 | 81.4 | -- |
| 7 | 210 | 50 | 76.2 | -- |

### Example II

The boiler used is a front fired coal design with a nominal 140 megawatt (thermal) per hour input. The temperature of the effluent which is measured at the first level of introduction is approximately 1039°C (1900°F) with an excess of oxygen of about 4.5% and the temperature of the effluent at the second level of introduction is approximately 955°C (1750°F) with an excess of oxygen of about 8.2%.

An aqueous solution comprising 8.6% by weight of urea and 0.17% by weight of a commercially available surfactant is introduced as the first treatment agent at a rate of 2 850 liters/hr. (754 gallons/hr.) to provide a normalized stoichiometric ratio (NSR) of treatment agent to baseline nitrogen oxides level of 1.79 and an aqueous solution comprising 16.5% by weight of urea and 0.33% by weight of a commercially available surfactant is introduced as the second treatment agent at a rate of 344 liters/hr. (91 gallons/hr.) to provide an NSR of treatment agent to baseline nitrogen oxides level of 0.41.

The baseline NOₓ level is measured at 693 ppm and the NOₓ level measured during introduction of the first treatment agent, measured upstream from introduction of the second treatment agent, is approximately 251 ppm. The NOₓ level measured during introduction of the first and second treatment agents is 145 ppm, which is an 79.1% reduction from the original baseline NOₓ level (all NOₓ levels are corrected so as to be standardized to 3% oxygen).

It will be apparent that by practice of the present invention, superior NOₓ reductions can be elicited without significant ammonia breakthrough.

## Claims

1. A process for the reduction of the concentration of nitrogen oxides in the effluent from the combustion of a carbonaceous fuel by selecting a plurality of locations for introduction of chemical formulations, wherein at each of said locations at least one chemical formulation effective to reduce the concentration of nitrogen oxides at the effluent temperature existing at said location is introduced, characterised in that each chemical formulation is chosen such that the nitrogen oxides concentration at each location is reduced while the generation of other pollutants is minimized.

2. The process of claim 1, which comprises:
a. introducing a first treatment agent into the effluent at a first temperature zone; and
b. introducing a second treatment agent into the effluent at a second temperature zone,
wherein said first and second treatment agents are introduced under conditions effective to lower the overall effluent pollution index.

3. The process of claim 2, wherein the effluent temperature at said first temperature zone is about 927°C (1700°F) to about 1150°C (2100°F) and said first treatment agent comprises gaseous ammonia or an aqueous solution of urea or ammonia.

4. The process of claim 2, wherein the effluent temperature at said first temperature zone is about 1011°C (1850°F) to about 1150°C (2100°F) and said first treatment agent comprises an aqueous solution comprising about 2% to about 10% of urea or ammonia and the effluent temperature at said second temperature zone is about 927°C (1700°F) to about 1011°C (1850°F) and said second treatment agent comprises an aqueous solution comprising about 10% to about 50% of urea or ammonia.

5. The process of claim 2, wherein the effluent temperature of said first temperature zone is about 1011°C (1850°F) to about 1150°C (2100°F) and said first treatment agent comprises gaseous ammonia or an aqueous solution of urea or ammonia and the effluent temperature at said second temperature zone is about 927°C (1700°F) to about 1011°C (1850°F) and said second treatment agent comprises an aqueous solution of urea or ammonia, wherein said second treatment agent further comprises a composition selected from the group consisting of hexamethylenetetramine and an oxygenated hydrocarbon.

6. The process of claim 3, wherein the effluent temperature at said second temperature zone is about 733°C (1350°F) to about 955°C (1750°F) and said second treatment agent comprises any of urea, ammonia, hexamethylenetetramine, a paraffinic hydrocarbon, an olefinic hydrocarbon, an aromatic hydrocarbon, an oxygenated hydrocarbon, an ammonium salt of an organic acid having a carbon to nitrogen ratio of greater than 1:1, a hydroxy amino hydrocarbon, a heterocyclic hydrocarbon having at least one cyclic oxygen, a five- or six-membered heterocyclic hydrocarbon having at least one cyclic nitrogen, hydrogen peroxide, guanidine, guanidine carbonate, biguanidine, guanylurea sulfate, melamine, dicyandiamide, calcium cyanamide, biuret, 1,1'azobisformamide, methylol urea, methylol urea-urea condensation product, dimethylol urea, methyl urea, dimethyl urea, and mixtures thereof.

7. The process of any one of claims 2 and 4-6, which further comprises introducing a third treatment agent into the effluent at a third temperature zone.

8. The process of claim 7, wherein the effluent temperature at said third temperature zone is about 427°C to about 761°C and said third treatment agent comprises monomethylamine, triethylene tetramine, hexamethylenediamine, tetraethylene pentamine, bis-hexamethylene triamine, polyamine HpA, 1,2-diaminopropane, N,N-dimethylethylenediamine, tetramethylethylenediamine, 2-methylaziridine, bis (3-aminopropyl) ethylenediamine, tetramethyldiaminomethane, ethylenediamine, and diethylenetriamine.

9. The process of claim 7, wherein the effluent temperature at said third temperature zone is below about 761°C (1400°F) and said third treatment agent comprises a composition selected from the group consisting of hydrogen peroxide and paraffinic, olefinic, aromatic, oxygenated, and nitrogenated hydrocarbons.

10. The process of claim 9, wherein said nitrogenated hydrocarbon is selected from the group consisting of monomethylamine, triethylene tetramine, hexamethylenediamine, tetraethylene pentamine, bis-hexamethylene triamine, polyamine HpA, 1,2-diaminopropane, N,N-dimethylethylenediamine, tetramethylethylenediamine, 2-methylaziridine, bis (3-aminopropyl) ethylenediamine, tetramethyldiaminomethane, ethylenediamine, and diethylenetriamine.

11. The process of claim 7, wherein the effluent temperature at said third temperature zone is about 427°C to about 761°C and said third treatment agent comprises urea, ammonia, hexamethylenetetramine, a paraffinic hydrocarbon, an olefinic hydrocarbon, an aromatic hydrocarbon, an oxygenated hydrocarbon, an ammonium salt of an organic acid having a carbon to nitrogen ratio of greater than 1:1, a hydroxy amino hydrocarbon, a heterocyclic hydrocarbon having at least one cyclic oxygen, a five- or six-membered heterocyclic hydrocarbon having at least one cyclic nitrogen, hydrogen peroxide, guanidine, guanidine carbonate, biguanidine, guanylurea sulfate, melamine, dicyandiamide, calcium cyanamide, biuret, 1,1-azobisformamide, methylol urea, methylol urea-urea condensation product, dimethylol urea, methyl urea, dimethyl urea, and mixtures thereof.

12. The process of claim 2, wherein the effluent temperature at said first temperature zone is about 733°C (1350°F) to about 955°C (1750°F) and said first treatment agent comprises monomethylamine, triethylene tetramine, hexamethylenediamine, tetraethylene pentamine, bis-hexamethylene triamine, polyamine HpA, 1,2-diaminopropane, N,N-dimethylethylenediamine, tetramethylethylenediamine, 2-methylaziridine, bis (3-aminopropyl) ethylenediamine, tetramethyldiaminomethane, ethylenediamine, and diethylenetriamine, and the effluent temperature at said second temperature zone is below about 761°C (1400°F) and said second treatment agent comprises a composition selected from the group consisting of hydrogen peroxide and paraffinic, olefinic, aromatic, oxygenated, and nitrogenated hydrocarbons.

13. The process of any one of claims 7-12, which comprises introducing a fourth treatment agent into the effluent at a fourth temperature zone.

14. The process of claim 1-13, wherein each of said treatment agents is introduced so as to minimize the generation of pollutants other than nitrogen oxides while substantially maximizing the reduction in nitrogen oxides concentration by utilizing the nitrogen oxides reduction versus effluent temperature curve for each treatment agent.

15. The process of claims 1-13, wherein earlier treatment agents are introduced so as to maximize nitrogen oxides reductions and later treatment agents are introduced to reduce effluent levels of secondary pollutants.

16. The process of claim 15, wherein all but the last treatment agents are introduced so as to maximize nitrogen oxides reductions and the last treatment agent is introduced to reduce effluent levels of secondary pollutants.

17. The process of claim 1-16, wherein each of said formulations is adjusted in response to changes in boiler load in order to substantially maintain the nitrogen oxides reductions achieved.

18. The process of claim 1-16, wherein each of said formulations is adjusted in response to changes in boiler load in order to maintain the nitrogen oxides level in the effluent at a specified level.

19. The process of any one of claims 5,6, 9, and 12, wherein said oxygenated hydrocarbon is selected from the group consisting of sugar, acetone, an alcohol, a lignin derivative, a carboxylic acid, a peroxide, an aldehyde, an ether, an ester, a ketone, glycerin, tetrahydrofuran, acetone, NH₄-lignosulfonate, calcium lignosulfonate, 1,3 dioxolane, 1,4 dioxane, tetrahydrofuran, furfurylamine, n-butyl acetate, methylal, furan, fish oil, furfuryl acetate, tetrahydrofuran tetrahydrofurylamine, tetrahydropyran, mannitol, hexamethylenediamine, and acetic anhydride.

20. The process of claim 19, wherein said sugar is selected from the group consisting of sucrose, d-galactose, and molasses.

21. The process of claim 19, wherein said alcohol is selected from the group consisting of ethylene glycol, methanol, furfurylalcohol, 1,3 butylene glycol, tetrahydrofuryl alcohol, 2,5-furandimethanol.

22. The process of claim 19, wherein said carboxylic acid is selected from the group consisting of 2-furoic acid, gluconic acid, citric acid, formic acid, coumalic acid, 2,3,4,5- tetracarboxylic acid, furylacrylic acid, barbituric acid, oxalic acid, and mucic acid.

23. The process of any one of claims 6 and 11, wherein said ammonium salt of an organic acid having a carbon to nitrogen ratio of greater than 1:1 is selected from the group consisting of ammonium acetate, ammonium and diammonium adipate, ammonium benzoate, ammonium binoxalate, ammonium caprylate, ammonium, diammonium, and triammonium citrate, ammonium crotonate, ammonium and diammonium dodecanoate, ammonium and diammonium fumarate, ammonium heptanoate, ammonium linolenate, ammonium and diammonium malate, ammonium mono butyrate, ammonium oleate, ammonium and diammonium pthalate, ammonium propionate, ammonium salicylate, ammonium and diammonium succinate, ammonium and diammonium tartarate, and ammonium, diammonium, and triammonium trimellitate.

24. The process of any one of claims 6 and 11, wherein said heterocyclic hydrocarbon having at least one cyclic oxygen is selected from the group consisting of furfural and derivatives of furfural.

25. The process of any one of claims 6 and 11, wherein said hydroxy amino hydrocarbon is selected from the group consisting of alkanolamines, amino acids, and protein-containing compositions.

26. The process of any one of claims 6 and 11, wherein said five- or six-membered heterocyclic hydrocarbon having at least one cyclic nitrogen is selected from the group consisting of piperazine, piperidine, pyridine, pyrazine, pyrazole, imidazole, oxazolidone, pyrrole, pyrrolidine, and mixtures thereof.

## Patentansprüche

1. Verfahren zur Verminderung der Stickoxidkonzentration in Abgasen aus der Verbrennung von kohlenstoffhaltigen Brennstoffen durch die Auswahl von mehreren Stellen zum Einbringen von chemischen Zubereitungen, wobei an jeder dieser Stellen mindestens eine chemische Zubereitung, die die Stickoxidkonzentration bei der an dieser Stelle herrschenden Abgastemperatur wirksam vermindern kann, eingeführt wird, dadurch gekennzeichnet, daß jede chemische Zubereitung so gewählt ist, daß die Stickoxidkonzentration an jeder Stelle vermindert wird, während die Bildung von anderen Schadstoffen minimiert wird.

2. Verfahren nach Anspruch 1, umfassend
a) Einbringen eines ersten Behandlungsmittels in das Abgas in einem ersten Temperaturbereich, und
b) Einbringen eines zweiten Behandlungsmittels in das Abgas in einem zweiten Temperaturbereich,
wobei das erste und das zweite Behandlungsmittel unter Bedingungen, die den gesamten Abgasschadstoffindex wirksam vermindern, eingebracht wird.

3. Verfahren nach Anspruch 2, wobei die Abgastemperatur im ersten Temperaturbereich etwa 927°C (1700°F) bis etwa 1150°C (2100°F) beträgt und das erste Behandlungsmittel gasförmigen Ammoniak oder eine wäßrige Harnstoff- oder Ammoniaklösung umfaßt.

4. Verfahren nach Anspruch 2, wobei die Abgastemperatur im ersten Temperaturbereich etwa 1011°C (1850°F) bis etwa 1150°C (2100°F) beträgt und das erste Behandlungsmittel eine wäßrige Lösung, umfassend etwa 2 % bis etwa 10 % Harnstoff oder Ammoniak umfaßt und die Abgastemperatur im zweiten Temperaturbereich etwa 927°C (1700°F) bis etwa 1011°C (1850°F) beträgt und das zweite Behandlungsmittel eine wäßrige Lösung, umfassend etwa 10 % bis etwa 50 % Harnstoff oder Ammoniak umfaßt.

5. Verfahren nach Anspruch 2, wobei die Abgastemperatur im ersten Temperaturbereich etwa 1011°C (1850°F) bis etwa 1150°C (2100°F) beträgt und das erste Behandlungsmittel gasförmigen Ammoniak oder eine wäßrige Harnstoff- oder Ammoniaklösung umfaßt, und die Abgastemperatur im zweiten Temperaturbereich etwa 927°C (1700°F) bis etwa 1011°C (1850°F) beträgt und das zweite Behandlungsmittel eine wäßrige Harnstoff- oder Ammoniaklösung umfaßt, wobei das zweite Behandlungsmittel zusätzlich eine Zusammensetzung umfaßt, die aus der Gruppe bestehend aus Hexamethylentetramin und einem sauerstoffhaltigen Kohlenwasserstoff gewählt ist, umfaßt.

6. Verfahren nach Anspruch 3, wobei die Abgastemperatur im zweiten Temperaturbereich etwa 733°C (1350°F) bis etwa 955°C (1750°F) beträgt und das zweite Behandlungsmittel Harnstoff, Ammoniak, Hexamethylentetramin, einen paraffinischen Kohlenwasserstoff, einen olefinischen Kohlenwasserstoff, einen aromatischen Kohlenwasserstoff, einen sauerstoffhaltigen Kohlenwasserstoff, ein Ammoniumsalz einer organischen Säure mit einem Kohlenstoff/Stickstoff-Verhältnis größer als 1:1, einen Hydroxy-amino-Kohlenwasserstoff, einen heterocyclischen Kohlenwasserstoff mit mindestens einem cyclischen Sauerstoffatom, einen 5- oder 6-gliedrigen heterocyclischen Kohlenwasserstoff mit mindestens einem cyclischen Stickstoffatom, Wasserstoffperoxid, Guanidin, Guanidincarbonat, Diguanidin, Guanylharnstoffsulfat, Melamin, Dicyandiamid, Calciumcyanamid, Biuret, 1,1'-Azobisformamid, Methylolharnstoff, Methylolharnstoff-Harnstoff-Kondensationsprodukt, Dimethylolharnstoff, Methylharnstoff, Dimethylharnstoff und Gemische daraus umfaßt.

7. Verfahren nach einem der Ansprüche 2 und 4 bis 6, welches zusätzlich das Einbringen eines dritten Behandlungsmittels in das Abgas in einem dritten Temperaturbereich umfaßt.

8. Verfahren nach Anspruch 7, wobei die Abgastemperatur in dem dritten Temperaturbereich etwa 427°C bis etwa 761°C beträgt und das dritte Behandlungsmittel Monomethylamin, Triethylentetramin, Hexamethylendiamin, Tetraethylenpentamin, Bis(hexamethylentriamin), Polyamin-HpA, 1,2-Diaminopropan, N,N-Dimethylethylendiamin, Tetramethylethylendiamin, 2-Methylaziridin, Bis[(3-aminopropyl)ethylendiamin], Tetramethylendiaminmethan, Ethylendiamin und Diethylentriamin umfaßt.

9. Verfahren nach Anspruch 7, wobei die Abgastemperatur im dritten Temperaturbereich unter etwa 761°C (1400°F) liegt und das dritte Behandlungsmittel eine Zusammensetzung gewählt aus der Gruppe bestehend aus Wasserstoffperoxid und paraffinischen, olefinischen, aromatischen sauerstofffhaltigen und stickstoffhaltigen Kohlenwasserstoffen umfaßt.

10. Verfahren nach Anspruch 9, wobei der stickstoffhaltige Kohlenwasserstoff aus der Gruppe bestehend aus Monomethylamin, Triethylentetramin, Hexamethylendiamin, Tetraethylenpentamin, Bis(hexamethylentriamin), Polyamin-HpA, 1,2-Diaminopropan, N,N-Dimethylethylendiamin, Tetramethylethylendiamin, 2-Methylaziridin, Bis[(3-aminopropyl)ethylendiamin], Tetramethyldiaminomethan, Ethylendiamin und Diethylentriamin gewählt ist.

11. Verfahren nach Anspruch 7, wobei die Abgastemperatur im dritten Temperaturbereich etwa 427°C bis etwa 761°C beträgt und das dritte Behandlungsmittel Harnstoff, Ammoniak, Hexamethylentetramin, einen paraffinischen Kohlenwasserstoff, einen olefinischen Kohlenwasserstoff, einen aromatischen Kohlenwasserstoff, einen sauerstoffhaltigen Kohlenwasserstoff, einem Ammoniumsalz einer organischen Säure mit einem Kohlenstoff/Stickstoff-Verhältnis von größer als 1:1, einem Hydroxy-Amino-Kohlenwasserstoff, einen heterocyclischen Kohlenwasserstoff mit mindestens einem cyclischen Sauerstoffatom, einen 5- oder 6-gliedrigen heterocyclischen Kohlenwasserstoff mit mindestens einem cyclischen Stickstoffatom, Wasserstoffperoxid, Guanidin, Guanidincarbonat, Biguanidin, Guanylharnstoffsulfat, Melamin, Dicyandiamid, Calciumcyanamid, Biuret, 1,1-Azobisformamid, Methylolharnstoff, Methylolharnstoff-Harnstoff-Kondensationsprodukt, Dimethylolharnstoff, Methylharnstoff, Dimethylharnstoff und Gemische daraus umfaßt.

12. Verfahren nach Anspruch 2, wobei die Abgastemperatur im ersten Temperaturbereich etwa 733°C (1350°F) bis etwa 955°C (1750°F) beträgt und das erste Behandlungsmittel Monomethylamin, Triethylentetramin, Hexamethylendiamin, Tetraethylenpentamin, Bis-hexamethylentriamin, Polyamin-HpA, 1,2-Diaminopropan, N,N-Dimethylethylendiamin, Tetramethylenethylendiamin, 2-Methylaziridin, Bis[(3-aminopropyl)ethylendiamin], Tetramethyldiaminomethan, Ethylendiamin und Diethylentriamin umfaßt und die Abgastemperatur im zweiten Temperaturbereich unter etwa 761°C (1400°F) liegt und das zweite Behandlungsmittel eine Zusammensetzung gewählt aus der Gruppe bestehend aus Wasserstoffperoxid und paraffinischen, olefinischen, aromatischen, sauerstoffhaltigen und stickstoffhaltigen Kohlenwasserstoffen, umfaßt.

13. Verfahren nach einem der Ansprüche 7 bis 12, welches zusätzlich das Einbringen eines vierten Behandlungsmittels in das Abgas in einem vierten Temperaturbereich umfaßt.

14. Verfahren nach den Ansprüchen 1 bis 13, wobei jedes der Behandlungsmittel so eingebracht wird, um die Bildung von Schadstoffen, die nicht Stickoxide sind, zu minimieren, während im wesentlichen die Verminderung der Stickoxidkonzentration gemäß der Stickoxidverminderung/Abgastemperatur-Kurve für jedes Behandlungsmittel maximiert wird.

15. Verfahren nach den Ansprüchen 1 bis 13, wobei die ersteren Behandlungsmittel so eingebracht werden, daß die Stickoxidverminderung maximiert wird und spätere Behandlungsmittel eingebracht werden, um den Abgasgehalt von sekundären Schadstoffen zu reduzieren.

16. Verfahren nach Anspruch 15, wobei alle bis auf das letzte Behandlungsmittel so eingebracht werden, daß die Stickoxidverminderung maximiert wird, und das letzte Behandlungsmittel eingebracht wird, um den Abgasgehalt von sekundären Schadstoffen zu reduzieren.

17. Verfahren nach den Ansprüchen 1 bis 16, wobei jede der Zubereitungen in Reaktion auf Änderungen der Kesselbelastung eingestellt werden, um so im wesentlichen die erreichte Stickoxidverminderung zu halten.

18. Verfahren nach den Ansprüchen 1 bis 16, wobei jede der Zubereitungen in Reaktion auf Änderungen der Kesselbelastung eingestellt wird, um so den Stickoxidgehalt im Abgas auf einem bestimmten Wert zu halten.

19. Verfahren nach einem der Ansprüche 5, 6, 9 und 12, wobei der sauerstoffhaltige Kohlenwasserstoff aus der Gruppe bestehend aus Zucker, Aceton, einem Alkohol, einem Ligninderivat, einer Carbonsäure, einem Peroxid, einem Aldehyd, einem Ether, einem Ester, einem Keton, Glycerin, Tetrahydrofuran, Aceton, NH₄-Lignonsulfonat, Calciumlignosulfonat, 1,3-Dioxolan, 1,4-Dioxan, Tetrahydrofuran, Furfurylamin, n-Butylacetat, Methylal, Furan, Fischöl, Furfurylacetat, Tetrahydrofurantetrahydrofurylamin, Tetrahydropyran, Mannit, Hexamethylendiamin und Acetanhydrid gewählt ist.

20. Verfahren nach Anspruch 19, wobei der Zucker aus der Gruppe bestehend aus Saccharose, D-Galactose und Melasse gewählt ist.

21. Verfahren nach Anspruch 19, wobei der Alkohol aus der Gruppe bestehend aus Ethylenglykol, Methanol, Furfurylalkohol, 1,3-Butylenglykol, Tetrahydrofurylalkohol und 2,5-Furandimethanol gewählt ist.

22. Verfahren nach Anspruch 19, wobei die Carbonsäure aus der Gruppe bestehend aus 2-Furancarbonsäure, Gluconsäure, Citronensäure, Ameisensäure, Kumalinsäure, 2,3,4,5-Tetracarbonsäure, Furylacrylsäure, Barbitursäure, Oxalsäure und Schleimsäure gewählt ist.

23. Verfahren nach einem der Ansprüche 6 und 11, wobei das Ammoniumsalz einer organischen Säure mit einem Kohlenstoff/Stickstoff-Verhältnis von größer als 1:1 aus der Gruppe bestehend aus Ammoniumacetat, Ammonium- und Diammoniumadipat, Ammoniumbenzoat, Ammoniumbinoxalat, Ammoniumcaprylat, Ammonium-, Diammonium- und Triammoniumcitrat, Ammoniumcrotonat, Ammonium- und Diammoniumdodecanoat, Ammonium- und Diammoniumfumarat, Ammoniumheptanoat, Ammoniumlinolenat, Ammonium- und Diammoniummalat, Ammoniummonobutyrat, Ammoniumoleat, Ammonium- und Diammoniumphthalat, Ammoniumpropionat, Ammoniumsalicylat, Ammonium- und Diammoniumsuccinat, Ammonium- und Diammoniumtartrat und Ammonium-, Diammonium- und Triammoniumtrimellitat gewählt ist.

24. Verfahren nach einem der Ansprüche 6 und 11, wobei der heterocyclische Kohlenwasserstoff mit mindestens einem cyclischen Sauerstoffatom aus der Gruppe bestehend aus Furfural und Furfuralderivaten gewählt ist.

25. Verfahren nach einem der Ansprüche 6 und 11, wobei der Hydroxy-amino-Kohlenwasserstoff aus der Gruppe bestehend aus Alkanolaminen, Aminosäuren und proteinhaltigen Zusammensetzungen gewählt ist.

26. Verfahren nach einem der Ansprüche 6 und 11, wobei der 5- oder 6-gliedrige heterocyclische Kohlenwasserstoff mit mindestens einem cyclischen Stickstoffatom aus der Gruppe bestehend aus Piperazin, Piperidin, Pyridin, Pyrazin, Pyrazol, Imidazol, Oxazolidon, Pyrrol, Pyrrolidin und Gemischen daraus gewählt ist.

## Revendications

1. Procédé pour réduire la concentration des oxydes d'azote dans l'effluent de la combustion d'un combustible charbonneux, qui consiste à sélectionner une pluralité d'emplacements pour introduire des formulations chimiques, dans lequel, en chacun de ces emplacements, on introduit au moins une formulation chimique permettant de réduire la concentration des oxydes d'azote à la température des effluents existant sur cet emplacement, caractérisé en ce que chaque formulation chimique est choisie de façon que la concentration des oxydes d'azote à chaque emplacement soit réduite, la production d'autres polluants étant minimisée.

2. Procédé selon la revendication 1, qui consiste :
a. à introduire un premier agent de traitement dans l'effluent, dans une première zone à haute température ; et
b. à introduire un deuxième agent de traitement dans l'effluent, dans une deuxième zone à haute température,
dans lequel ledit premier et ledit deuxième agents de traitement sont introduits dans des conditions permettant de diminuer l'indice global de pollution de l'effluent.

3. Procédé selon la revendication 2, dans lequel la température de l'effluent dans ladite première zone à haute température est d'environ 927 à environ 1150°C (environ 1700 à environ 2100°F), ledit premier agent de traitement comprenant de l'ammoniac gazeux ou une solution aqueuse d'urée ou d'ammoniac.

4. Procédé selon la revendication 2, dans lequel la température de l'effluent dans ladite première zone à haute température est d'environ 1011 à environ 1150°C (d'environ 1850 à environ 2100°F) et que ledit premier agent de traitement comprend une solution aqueuse comprenant d'environ 2 à environ 10 % d'urée ou d'ammoniac, et la température de l'effluent dans ladite deuxième zone à haute température est d'environ 927 à environ 1011°C (d'environ 1700 à environ 1850°F), ledit deuxième agent de traitement comprenant une solution aqueuse qui contient d'environ 10 à environ 50 % d'urée ou d'ammoniac.

5. Procédé selon la revendication 2, dans lequel la température de l'effluent dans ladite première zone à haute température est d'environ 1011 à environ 1150°C (d'environ 1850 à environ 2100°F), et ledit premier agent de traitement comprend de l'ammoniac gazeux ou une solution aqueuse durée ou d'ammoniac, la température de l'effluent dans ladite deuxième zone à haute température étant d'environ 927 à environ 1011°C (d'environ 1700 à environ 1850°F), ledit deuxième agent de traitement comprenant une solution aqueuse d'urée ou d'ammoniac, ledit deuxième agent de traitement comprenant en outre une composition choisie parmi l'ensemble comprenant l'hexaméthylènetétramine et un hydrocarbure oxygéné.

6. Procédé selon la revendication 3, dans lequel la température de l'effluent dans ladite deuxième zone à haute température est d'environ 733 à environ 955°C (d'environ 1350 à environ 1750°F), et ledit deuxième agent de traitement comprend l'un quelconque des composés suivants : urée, ammoniac, hexaméthylènetétramine, un hydrocarbure paraffinique, un hydrocarbure oléfinique, un hydrocarbure aromatique, un hydrocarbure oxygéné, un sel d'ammonium d'un acide organique ayant un rapport carbone: azote supérieur à 1:1, un hydrocarbure hydroxyaminé, un hydrocarbure hétérocyclique comportant au moins un oxygène cyclique, un hydrocarbure hétérocyclique à cinq ou six chaînons ayant au moins un azote cyclique, le peroxyde d'hydrogène, la guanidine, le carbonate de guanidine, la biguanidine, le sulfate de guanylurée, la mélamine, le dicyanodiamide, le cyanamidure de calcium, le biuret, le 1,1'-azobisformamide, la méthylolurée, le produit de condensation méthylolurée-urée, la diméthylolurée, la méthylurée, la diméthylurée et leurs mélanges.

7. Procédé selon l'une quelconque des revendications 2 et 4-6, qui consiste en outre à introduire un troisième agent de traitement dans l'effluent, dans une troisième zone à haute température.

8. Procédé selon la revendication 7, dans lequel la température de l'effluent dans ladite troisième zone à haute température est d'environ 427 à environ 761°C, ledit troisième agent de traitement comprenant la monométhylamine, la triéthylènetétramine, l'hexaméthylènediamine, la tétraéthylènepentamine, la bis-hexaméthylènetriamine, la polyamine-HpA, le 1,2-diaminopropane, la N,N-diméthyléthylènediamine, la tétraméthyléthylènediamine, la 2-méthylaziridine, la bis-(3-aminopropyl)éthylènediamine,le tétraméthyldiaminométhane, l'éthylènediamine et la diéthylènetriamine.

9. Procédé selon la revendication 7, dans lequel la température de l'effluent dans ladite troisième zone à haute température est inférieure à 761°C (1400°F), ledit troisième agent de traitement comprenant une composition choisie parmi l'ensemble comprenant le peroxyde d'hydrogène et les hydrocarbures paraffiniques, oléfiniques, aromatiques, oxygénés et azotés.

10. Procédé selon la revendication 9, dans lequel ledit hydrocarbure azoté est choisi parmi l'ensemble comprenant la monométhylamine, la triéthylènetétramine, l'hexaméthylènediamine, la tétraéthylènepentamine, la bis-hexaméthylènetriamine, la polyamine-HpA, le 1,2-diaminopropane, la N,N-diméthyléthylènediamine, la tétraméthyléthylènediamine, la 2-méthylaziridine, la bis-(3-aminopropyl)éthylènediamine, le tétraméthyldiaminométhane, l'éthylènediamine et la diéthylènetriamine.

11. Procédé selon la revendication 7, dans lequel la température de l'effluent dans ladite troisième zone à haute température est d'environ 427 à environ 761°C, et ledit troisième agent de traitement comprend l'urée, l'ammoniac, l'hexaméthylènetétramine, un hydrocarbure paraffinique, un hydrocarbure oléfinique, un hydrocarbure aromatique, un hydrocarbure oxygéné, un sel d'ammonium d'un acide organique ayant un rapport carbone:azote supérieur à 1:1, un hydrocarbure hydroxyaminé, un hydrocarbure hétérocyclique comportant au moins un oxygène cyclique, un hydrocarbure hétérocyclique à cinq ou six chaînons ayant au moins un azote cyclique, le peroxyde d'hydrogène, la guanidine, le carbonate de guanidine, la biguanidine, le sulfate de guanylurée, la mélamine, le dicyanodiamide, le cyanamidure de calcium, le biuret, le 1,1 -azobisformamide, la méthylolurée, le produit de condensation méthylolurée-urée, la diméthylolurée, la méthylurée, la diméthylurée et leurs mélanges.

12. Procédé selon la revendication 2, dans lequel la température de l'effluent dans ladite deuxième zone à haute température est d'environ 733 à environ 955°C (d'environ 1350 à environ 1750°F), et ledit premier agent de traitement comprend la monométhylamine,la triéthylènetétramine, l'hexaméthylènediamine, la tétraéthylènepentamine, la bis-hexaméthylènetriamine, la polyamine-HpA, le 1,2-diaminopropane, la N,N-diméthyléthylènediamine, la tétraméthyléthylènediamine, la 2-méthylaziridine, la bis-(3-aminopropyl)éthylènediamine, le tétraméthyldiaminométhane, l'éthylènediamine et la diéthylènetriamine, et la température de l'effluent dans ladite deuxième zone à haute température est inférieure à environ 761°C (1400°F), et ledit deuxième agent de traitement comprenant une composition choisie parmi l'ensemble comprenant le peroxyde d'hydrogène et les hydrocarbures paraffiniques, oléfiniques, aromatiques, oxygénés et azotés.

13. Procédé selon l'une quelconque des revendications 7-12, qui consiste à introduire un quatrième agent de traitement dans l'effluent dans une quatrième zone à haute température.

14. Procédé selon l'une des revendications 1 à 13, dans lequel chacun desdits agents de traitement est introduit de façon à minimiser la production de polluants autres que les oxydes d'azote, tout en assurant essentiellement une maximisation de la réduction de la concentration des oxydes d'azote par l'utilisation, pour chaque agent de traitement, de la courbe donnant les variations de la réduction de la concentration des oxydes d'azote en fonction de la température de l'effluent.

15. Procédé selon les revendications 1 à 13, dans lequel les premiers agents de traitement sont introduits de façon à maximiser la réduction des oxydes d'azote et les derniers agents de traitement sont introduits pour réduire les concentrations des polluants secondaires dans les effluents.

16. Procédé selon la revendication 15, dans lequel tous les agents de traitement, sauf le dernier, sont introduits de façon à maximiser la réduction des oxydes d'azote, le dernier agent de traitement étant introduit pour réduire la concentration des polluants secondaires dans les effluents.

17. Procédé selon les revendications 1 à 16, dans lequel chacune desdites formulations est ajustée en réponse aux variations de la charge de la chaudière, pour conserver la presque totalité des réductions des oxydes d'azote que l'on a obtenues.

18. Procédé selon les revendications 1 à 16, dans lequel chacune desdites formulations est ajustée en réponse à des variations de la charge de la chaudière, pour maintenir à une valeur spécifiée la concentration des oxydes d'azote dans les effluents.

19. Procédé selon l'une quelconque des revendications 5, 6, 9 et 12, dans lequel ledit hydrocarbure oxygéné est choisi parmi l'ensemble comprenant le sucre, l'acétone, un alcool, un dérivé de la lignine, un acide carboxylique, un peroxyde, un aldéhyde, un éther, un ester, une cétone, le glycérol, le tétrahydrofuranne, l'acétone, le lignosulfonate de NH₄, le lignosulfonate de calcium, le 1,3-dioxolanne, le 1,4-dioxanne, le tétrahydrofuranne, la furfurylamine, l'acétate de n-butyle, le méthylal, le furanne, l'huile de poisson, l'acétate de furfuryle, la tétrahydrofurylamine du tétrahydrofuranne, le tétrahydropyranne, le mannitol, l'hexaméthylènediamine et l'anhydride acétique.

20. Procédé selon la revendication 19, dans lequel ledit sucre est choisi parmi l'ensemble comprenant le saccharose, le d-galactose et les mélasses.

21. Procédé selon la revendication 19, dans lequel ledit alcool est choisi parmi l'ensemble comprenant l'éthylèneglycol, le méthanol, l'alcool furfurylique, le 1,3-butylèneglycol, l'alcool tétrahydrofurylique, le 2,5-furannediméthanol.

22. Procédé selon la revendication 19, dans lequel ledit acide carboxylique est choisi parmi l'ensemble comprenant l'acide 2-furoïque, l'acide gluconique, l'acide citrique, l'acide formique, l'acide coumalique, l'acide 2,3,4,5-tétracarboxylique,l'acide furylacrylique, l'acide barbiturique, l'acide oxalique et l'acide mucique.

23. Procédé selon l'une quelconque des revendications 6 à 11, dans lequel ledit sel d'ammonium d'un acide organique ayant un rapport carbone:azote supérieur à 1:1 est choisi parmi l'ensemble comprenant l'acétate d'ammonium, l'adipate d'ammonium et de diammonium, le benzoate d'ammonium, le binoxalate d'ammonium, le caprylate d'ammonium, le citrate d'ammonium, de diammonium et de triammonium, le crotonate d'ammonium, le dodécanoate d'ammonium et de diammonium, le fumarate d'ammonium et de diammonium, l'heptanoate d'ammonium, le linolénate d'ammonium, le malate d'ammonium et de diammonium, le monobutyrate d'ammonium, l'oléate d'ammonium, le phtalate d'ammonium et de diammonium, le propionate d'ammonium, le salicylate d'ammonium, le succinate d'ammonium et de diammonium, le tartrate d'ammonium et de diammonium, et le trimellitate d'ammonium, de diammonium et de triammonium.

24. Procédé selon l'une quelconque des revendications 6 et 11, dans lequel ledit hydrocarbure hétérocyclique ayant au moins un oxygène cyclique est choisi parmi l'ensemble comprenant le furfural et les dérivés du furfural.

25. Procédé selon l'une quelconque des revendications 6 et 11, dans lequel ledit hydrocarbure hydroxyaminé est choisi parmi l'ensemble comprenant les alcanolamines, les acides aminés et les compositions contenant des protéines.

26. Procédé selon l'une quelconque des revendications 6 et 11, dans lequel ledit hydrocarbure hétérocyclique à cinq ou six chaînons ayant au moins un atome cyclique est choisi parmi l'ensemble comprenant la pipérazine, la pipéridine, la pyridine, la pyrazine, le pyrazole, l'imidazole, l'oxazolidone, le pyrrole, la pyrrolidine et leurs mélanges.
